# EUROPEAN PATENT SPECIFICATION

(11) **EP 3 707 516 B1**
(45) Date of publication and mention of the grant of the patent: **21.08.2024**
(21) Application number: 18796846.6
(22) Date of filing: 07.11.2018
(51) Int. Cl.: G01N 35/00

(54) **AUTOMATED SYSTEM FOR READING IDENTIFICATION CODES PRINTED ON SLIDES**
AUTOMATISIERTES SYSTEM ZUM LESEN VON AUF OBJEKTTRÄGERN AUFGEDRUCKTEN IDENTIFIZIERUNGSCODES
SYSTÈME AUTOMATISÉ DE LECTURE DE CODES D'IDENTIFICATION IMPRIMÉS SUR DES LAMES

(30) Priority: 09.11.2017 IT 201700128171
(43) Date of publication of application: 16.09.2020
(73) Proprietor: Mecatron Automazione S.r.l., 64010 Colonnella (TE) (IT)
(72) Inventor: CINTI, Mario, 63100 Ascoli Piceno (IT)
(74) Representative: Dall'Olio, Christian
(86) International application number: PCT/EP2018/025284
(87) International publication number: WO 2019/091598

(56) References cited:
- US-A1- 2005 186 114
- US-B1- 6 495 106
- US-B2- 8 722 412

## Description

### Field of the invention

This invention concerns the field of pathological anatomy, in particular the sector related to the reading of slides used in hospital departments, and more specifically an automated system for reading codes printed on the slides.

### Background of the invention

In the present state of the art, it is known that samples of tissue from biopsies are placed in histology cassettes, processed, including in paraffin, cut using a microtome in hundredth slices and positioned on the upper side of a slide. It is known that, to read the codes on the slides, these are placed inside trays, normally marked on coordinates with letters and numbers to facilitate identification of each individual slide; said trays are comprised of housing formed by vertical walls along the entire length of the same, thus forming "n" side-by-side columns.

Each column is as wide as the slides and includes tabs separating the slides, placed one after the other, ensuring each slide is kept in position, normally vertically or slanting slightly.

A slide is intended to mean a small plate, generally of glass, of known indicative size of 75*25 mm and approximately 1 mm thick, on which a "slice" of a histological section deriving from the processing of a sample of tissue. Said "slice" is secured on the slide by means of a second plate known as a "slide cover", since its purpose is to cover the specimen of biological material to be analysed with a microscope.

Furthermore, it is known that slides are marked with identification codes that can be:
- 1D or 2D (bar or data matrix codes) or alphanumeric,
- applied by hand with special marker pens, printed normally by means of thermal transfer or other technologies,
- applied on labels.

Operators generally have to handle a large number of slides and often need to identify them quickly and easily, while guaranteeing compliance with quality and reliable traceability requirements, and ensuring that the probability of making mistakes is minimal.

It is also known that slides are placed in containers, inside which the slides are:
- or placed flat one on top of another,
- or housed vertically touching one another,
- or housed vertically in hollows (pockets) separating the slides from each other so that they do not touch each other, facilitating insertion and removal of the slides from the pockets.

By stacking the slides one on top of the other either horizontally or vertically:
- the slides are difficult to identify, since they must be taken or extracted one at a time, hindering automatic reading of the identification codes;
- a longer length of time is required to perform said process, since the slides have to be lifted, read and then put back one at a time.

In the present state of the art, document WO2016016814 A1 is known and discloses a method and a device for the management of slides for specimens of biological material. Said slides are arranged in succession along a line (L) and are perpendicular to the latter. The slides can be moved vertically by a means of movement in order to reach different distances ranging between a rest position and a reading position. Said means of movement are mobile along the line (L) or parallel to said line (L) and move at least one slide at a time.

The disadvantage of this known device is that it moves at least one slide at a time or, when it moves more than one slide, the movement is always along the line (L) where the slides are arranged in succession. This results in a lengthy identification process, since while the slide being read is in the operative position, the one immediately after it is in a slightly lower position and therefore, before the second slide can be identified, the first one must already have been read, it must have returned to the rest position and the second slide must have been provided with enough time to reach the operational position.

At the state of the art, in the sector related to the reading of slides the following documents are also known:
- US 6495106 B1 that discloses an automated apparatus for staining cell and tissue specimens on microscope slides;
- US 2005/186114 A1 that discloses an automated system for performing slide processing operations on slides bearing biological samples. Said system enables high sample throughput and increased staining consistency, while also minimizing the potential for cross-contamination of slides.
- US 8722412 B2 that discloses a method and an apparatus for sensing slides that enable, in a particularly simple and reliable manner, the identification of the slides and, in particular, the samples placed on the slides, where the apparatus for sensing the slides can be an additional element of a staining apparatus (normally known) or a coverslipping apparatus.

### Disclosure of the invention

The object of this invention is to create a system that rapidly and easily identifies the codes on slides that are grouped and stored in a container. Another object of this invention is to create a system that limits the possibility of making mistakes when identifying slides.

Another object of this invention is to create a system that enables simultaneous reading of multiple slides placed side by side or one after the other, using various types of containers.

Finally, the object of this invention is to create a system that is able to facilitate slide identification operations, resolving issues relating to the prior art.

These and other objects are attained with this invention, which relates to an automated system to identify the codes of slides containing histology sections from biological specimens.

Additional characteristics and advantages of the invention will become more apparent from the description of a preferred, but not exclusive, form of implementation of the system forming the subject matter of this patent application, illustrated by way of indication, but not limited to, the drawing units below:

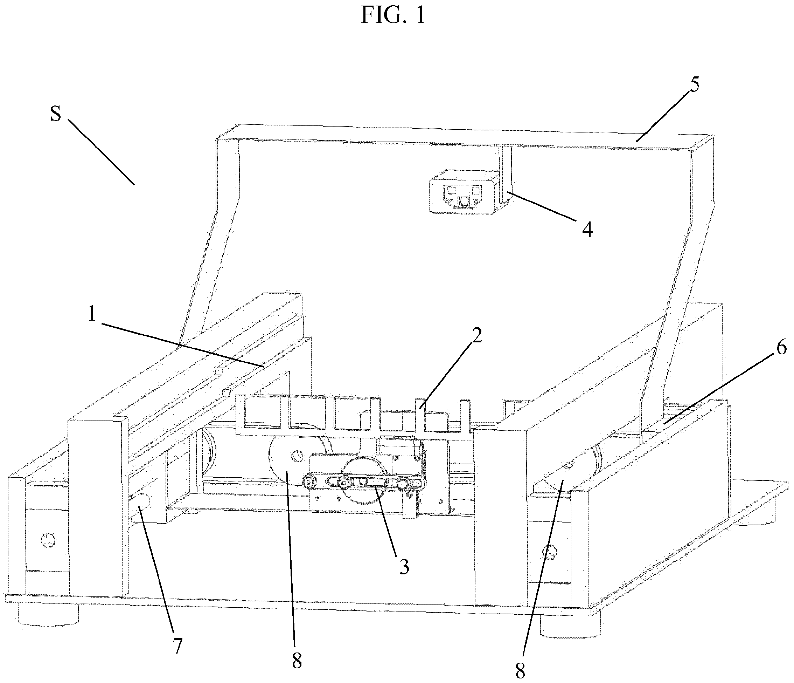

- Fig. 1 shows a three-dimensional view of a system (S) for reading codes printed on slides where the following are visible:
   - guides (1) for positioning a container in a fixed position;
   - a comb device (2) for lifting a row of slides;
   - a lifting lever (3) which moves the comb device (2);
   - a sensor (4) for reading slides positioned on a bracket (5) connected to two mobile carriages (6) that move on the axes of movement (7);
   - pulleys (8) for axle movement (7);

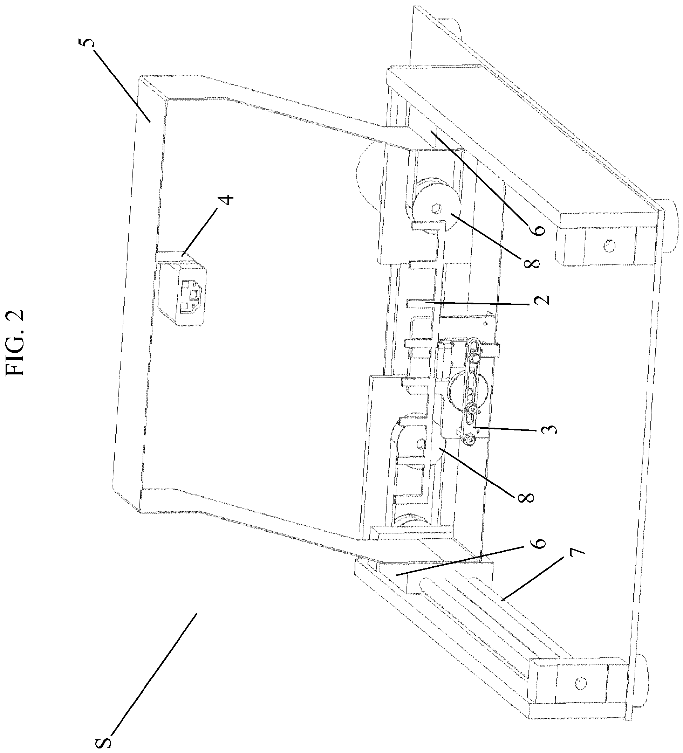

- Fig. 2 shows a three-dimensional view of the system (S) illustrating how the mobile carriages (6) move on the axes of movement (7);

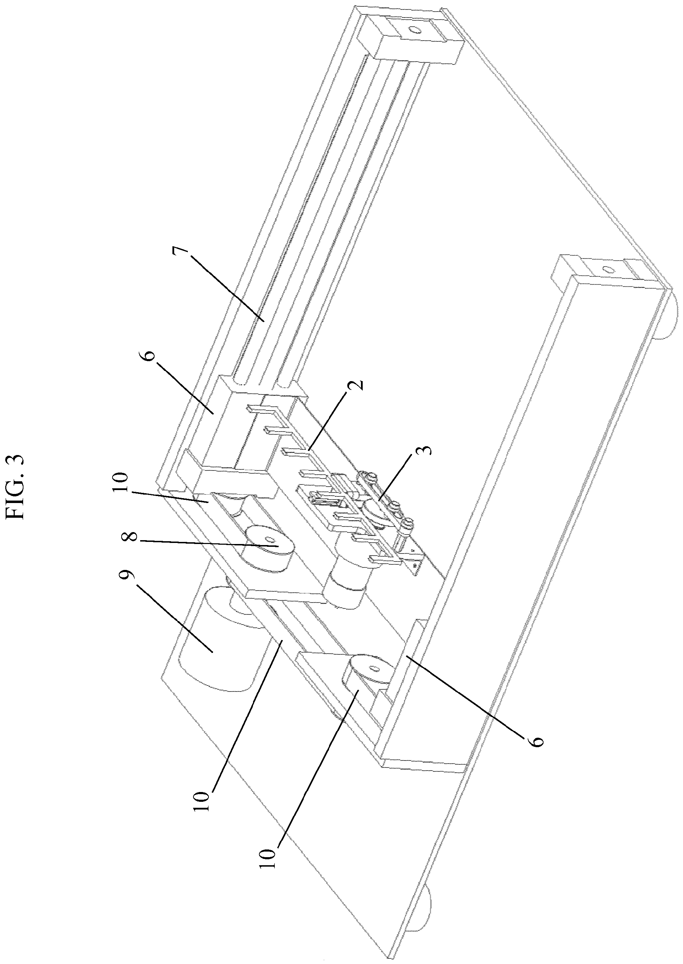

- Fig. 3 shows a three-dimensional view of the system (S) illustrating a motor (9) driving the pulleys (8) connected together by belts (10);

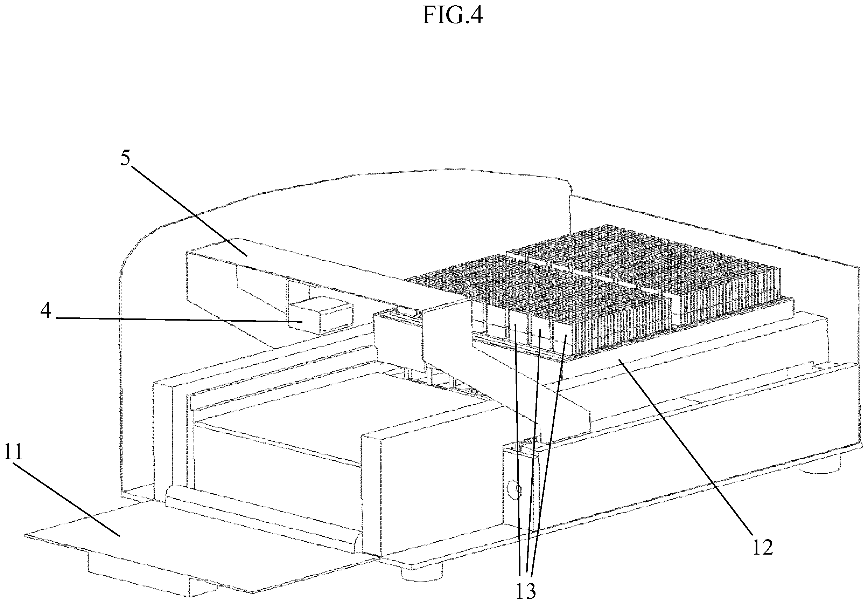

- Fig. 4 shows in a three-dimensional view of the system (S) illustrating that, by means of the opening of a door (11), a container (12) in which slides (13) are housed in an orderly manner in the rest position in spaces can be introduced to said system (S);

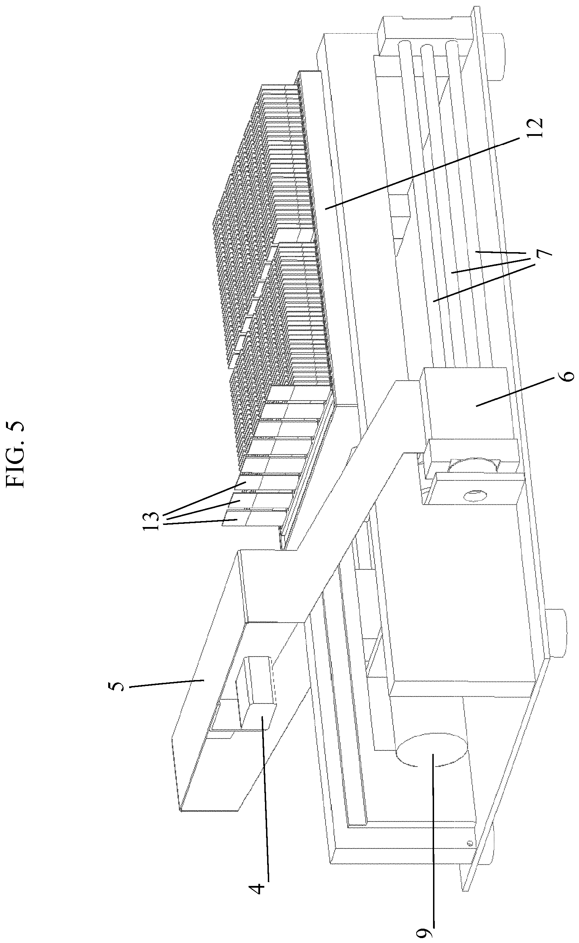

- Fig. 5 shows a three-dimensional view of the system (S) in Fig. 4 in which slides (13) are raised to enable the sensor (4) to read the identification codes;

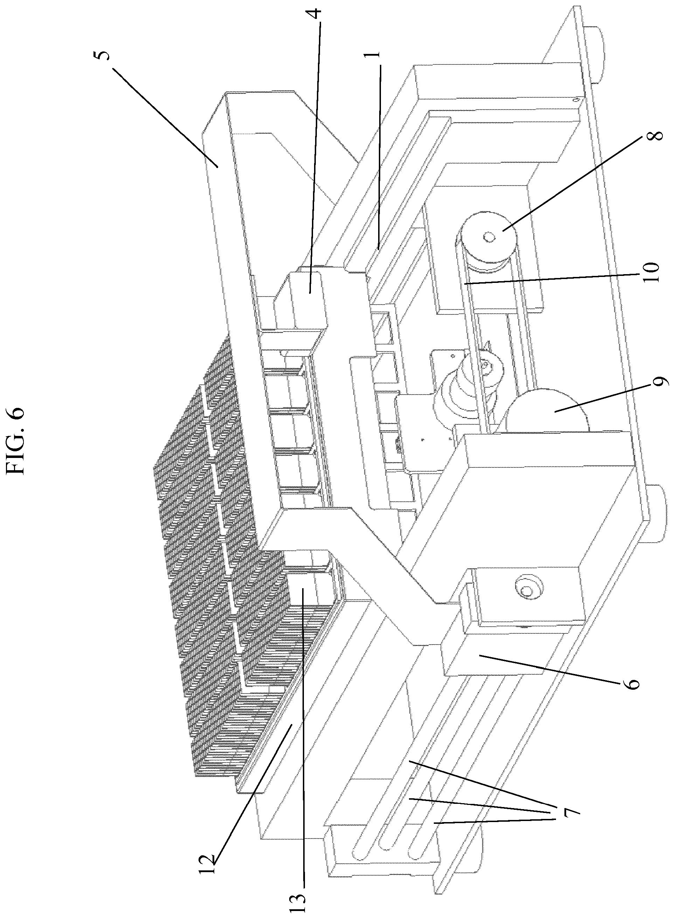

- Fig. 6 shows a further three-dimensional view of the system (S) in Fig. 4 in which the slides (13) are in rest position;

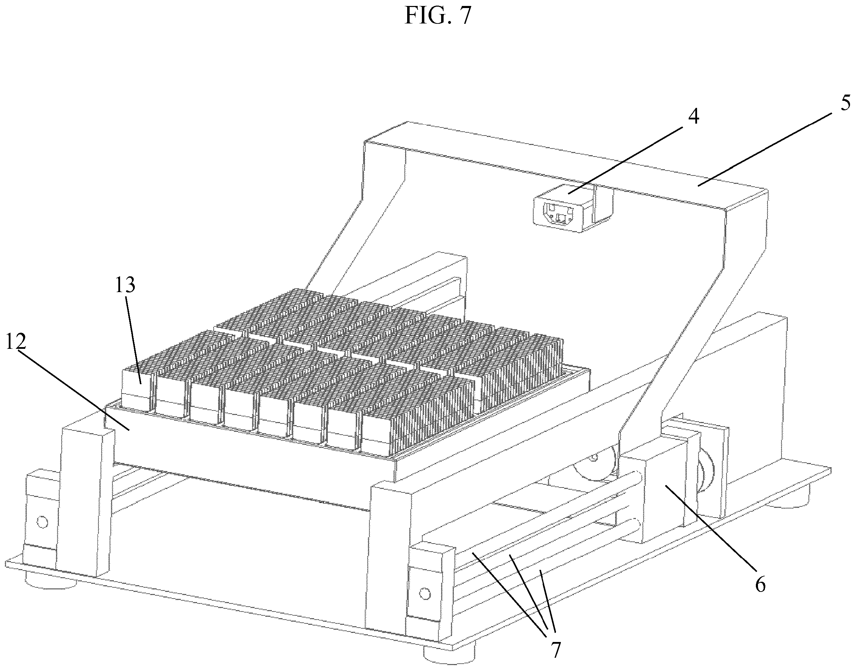

- Fig. 7 shows a further three-dimensional view of the system (S) of Fig. 6;

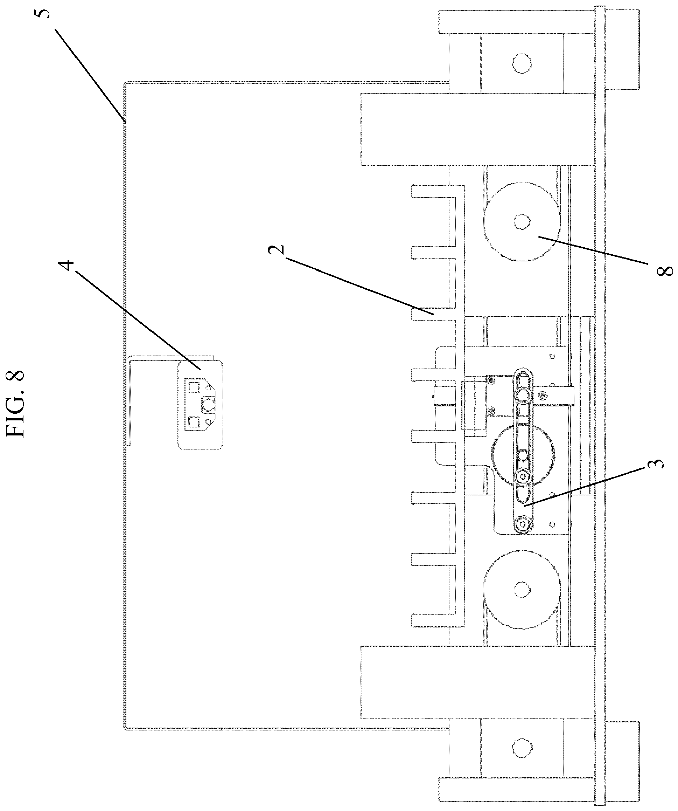

- Fig. 8 shows a sectional view of the system (S), illustrating:
   - the sensor (4) for reading slides;
   - pulleys (8) for axle movement (7);

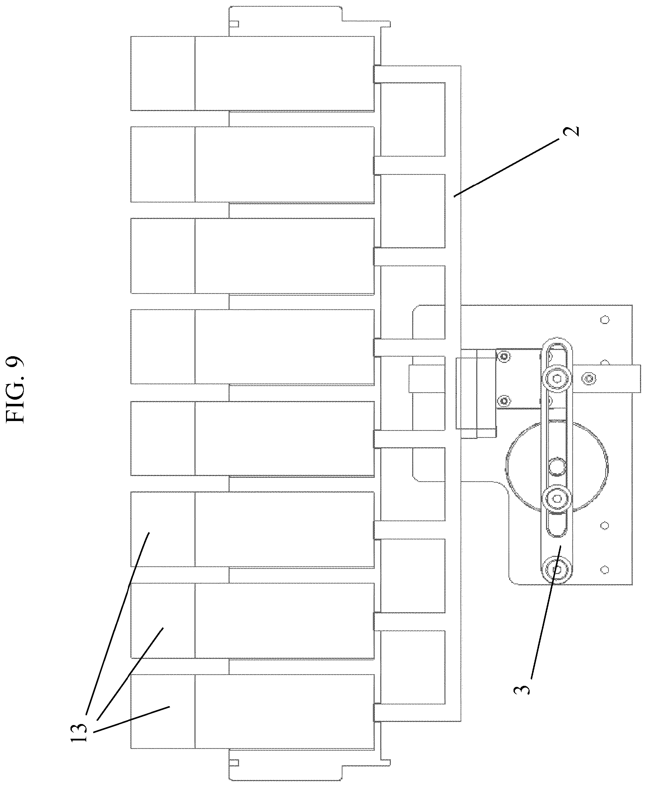

- Fig. 9 shows a detailed view of the comb device (2), the lifting lever (3) and the slides (13) in the rest position;

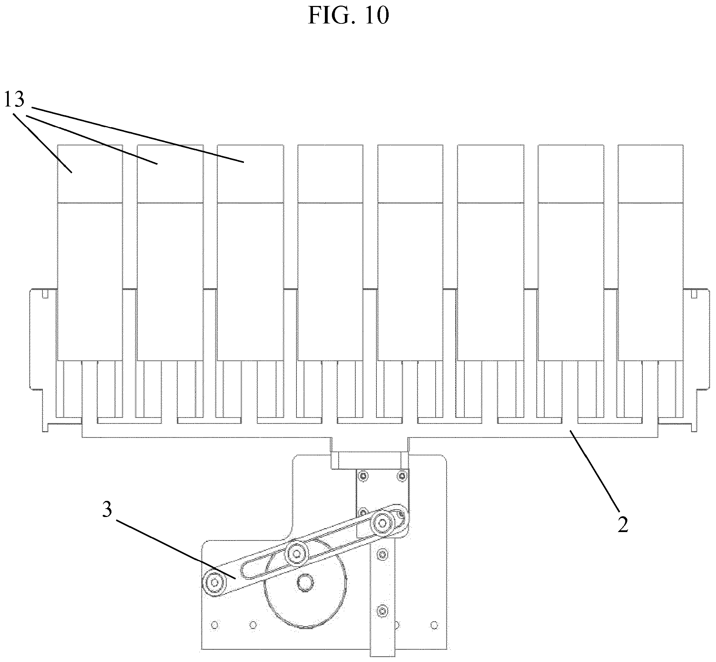

- Fig. 10 shows a detailed view of the comb device (2), the lifting lever (3) and the raised slides (13);

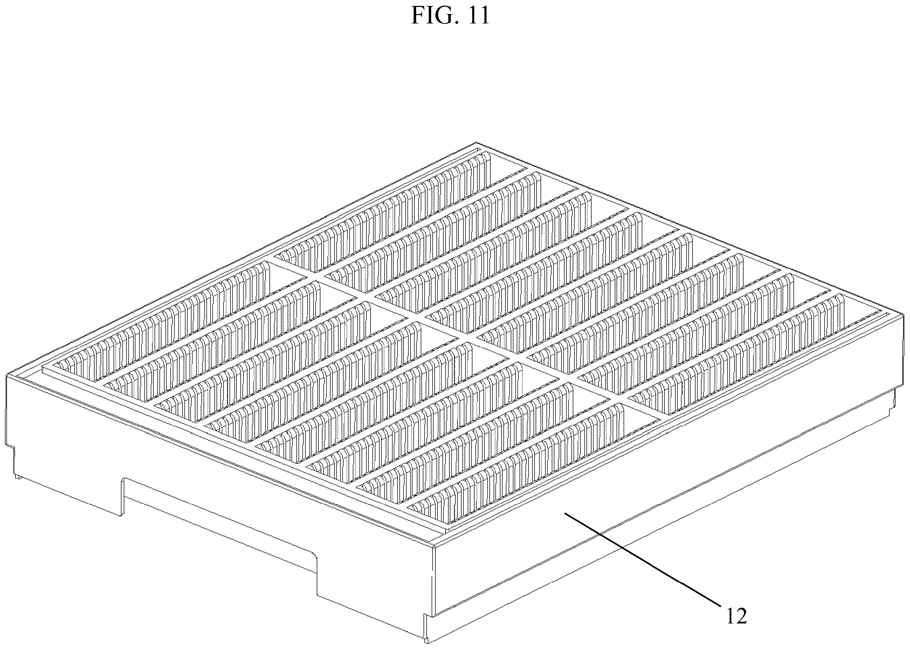

- Fig. 11 shows a three-dimensional view of the container (12);

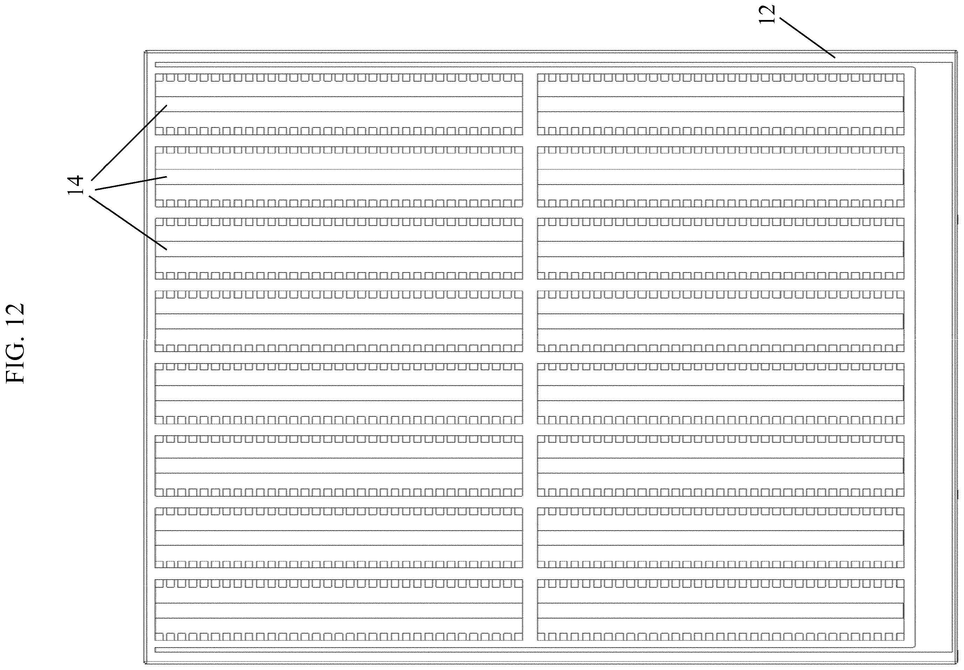

- Fig. 12 shows an above-view of the container (12) in Fig. 11 illustrating the slots (14) cut at the bottom;

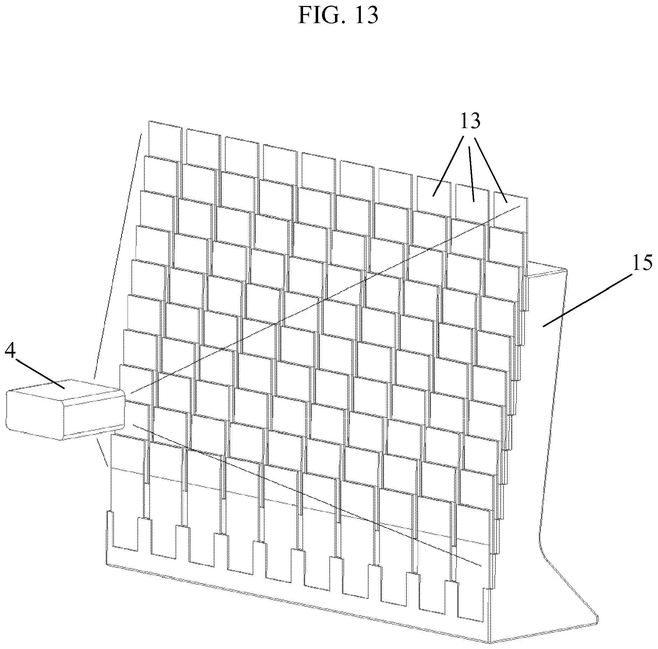

- Fig. 13 shows a three-dimensional view of a static display container (15);

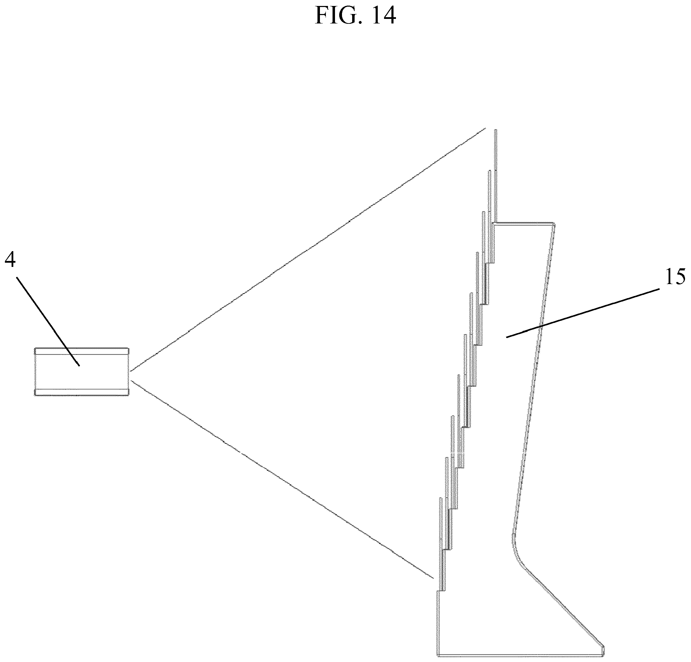

- Fig. 14 shows a lateral view of the display container (15) in Fig. 13;

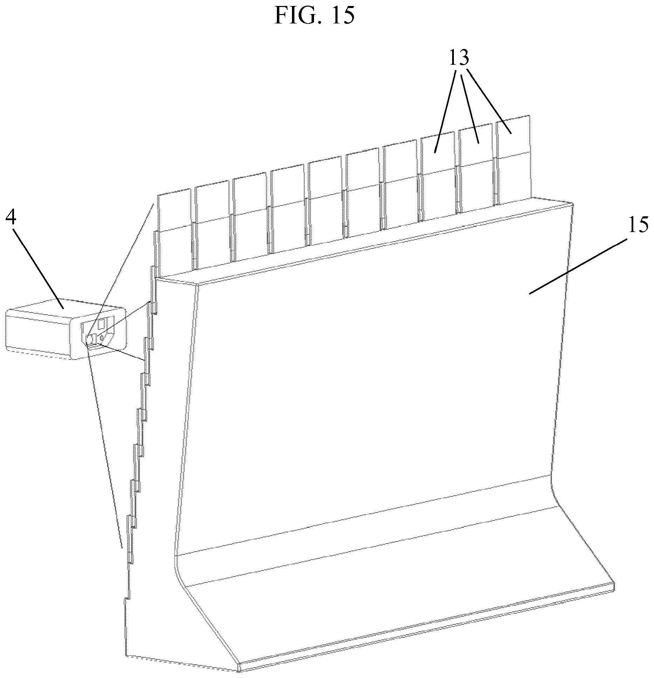

- Fig. 15 shows a further three-dimensional view of the display container (15) in Fig. 13;
- Fig. 16 shows a three-dimensional view of:
   - a sensor (4) for reading slides (13) moving a long a bracket (5bis) by means of an additional electric axle (16) (Fig. 16A) scanning in sequence (step by step or continuously) the row of slides (13);
   - a single central mobile carriage (6bis), which slides on respective central axes of movement (7bis), is connected to the bracket (5bis) and is placed under a lifting lever (3bis).

### Detailed Description of the Invention

The invention concerns an automated reading system (S) of identification codes printed on slides (13).

Said system (S) includes:
- guides (1) for positioning in a fixed position a container (12) with slots (14) on the base of the same, inside which slides (13) are housed in an orderly manner in spaces;
- a comb device (2) for lifting a row of slides (13);
- a sensor (4) for reading slides (13) positioned on a bracket (5) connected to two mobile carriages (6) that move on axes of movement (7);
- a door (11) for inserting the container (12) in the system (S);
the system (S) being characterised in that it comprises:
- a lifting lever (3) configured to move the comb device (2);
- pulleys (8) configured to actuate the two mobile carriages to move on the axes of movement (7);
- a motor (9) configured to drive the pulleys (8) connected together by belts (10); where the two mobile carriages (6) are configured to move following the actuation of the pulley (8), and wherein said mobile carriages (6) are mechanically or electrically connected together and simultaneously move the comb device (2) and the bracket (5) on which the reading sensor (4) is located and further characterized in that the lifting lever (3) is configured to move to under the row of slides (13) to be lifted, enter the slot (14) of the container (12) and actuate the raising of the row of slides (13) such that the distance between the reading sensor (4) and the slides (13) to be read is identical for each movement and synchronous with the row of slides (13) to be lifted.

The system (S) forming the subject matter of this patent application can be used with containers of any size and is based on the concurrent lifting of multiple slides (13) arranged in the same row by means of the lifting comb (2), which passes through the slots (14).

The containers (12) have slots (14) cut at a regular pitch.

The automation and therefore the speeding up of the reading of the slides presupposes that the slides are positioned vertically (or tilted slightly) in a stable manner to ensure slide (13) descent after reading; furthermore, the slides (13) are spaced apart to facilitate manual removal of the same from the container (12) and to enable automatic lifting of the slides from their housing along the vertical axis, so that the upper part of the slides can be read, before being repositioned in the relevant housing once reading has taken place.

The slides (13) are lifted by means of the comb device (2), which in turn is actuated by the lifting lever (3).

Moving on the axes of movement (7), said lifting lever (3) moves to under the row of slides (13) to be lifted, enters the slot (14) in the container (12) and actuates the raising of the row of slides (13).

The positions that can be taken by the axis (7) (which can be programmed using software) are those relative to the positioning heights of each row, which can be modified in accordance with various container types (12) and various rows of slides (13).

Each programmed position represents a position of the slide (13) reported in a PC screen window to which the code read on the slide (13) is associated. By reading all the slides (13) present in the container (12), any missing slides (13) will not be read and the PC will consider the relevant positions either empty or unidentified.

By means of the lifting lever (3), the slides (13) rise until only the bands on which the codes are printed are exposed. The slides do not ever rise completely out of the container (12).

In an alternative form of creation, the system (S) can be equipped with more than one comb device (2) with each device being actuated by its own lifting lever (3); in this case, two or more rows can be read lifting them in different ways, ensuring that the bands are always exposed.

In an alternative form of creation, a static display container (15) enabling the slides (13) to be read without being moved can be created. In said container (15), each row of slides (13) is arranged in order that the slide reading bands are exposed. The reading sensor (4) moves vertically with respect to the display container (15) maintain the same reading distance. Alternatively, a sensor capable of reading the entire area of the vertical container (15) can be used.

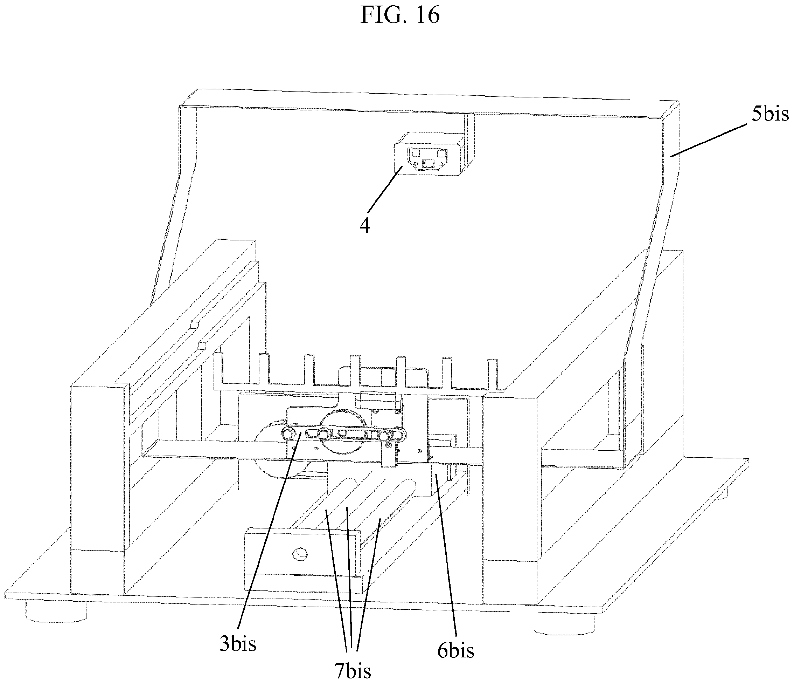

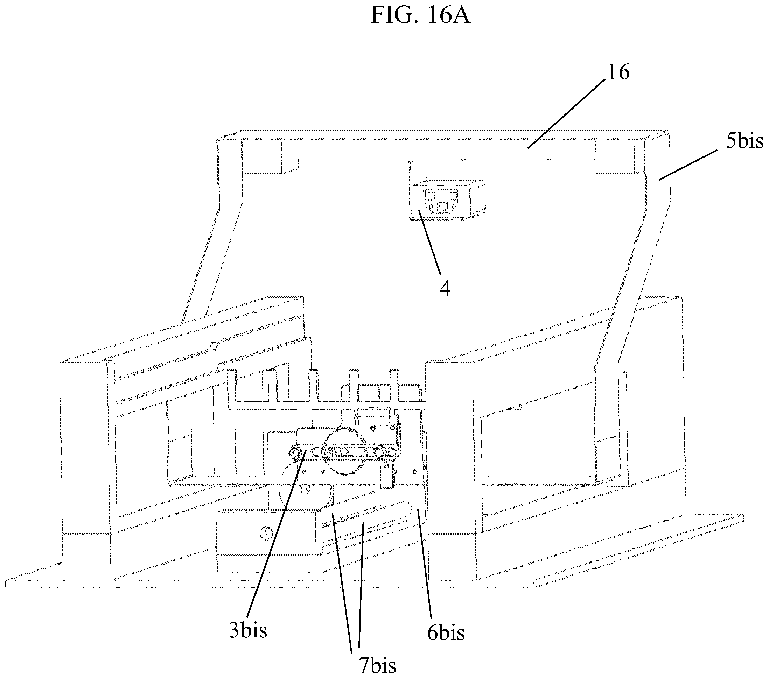

A further alternative can be to move the step-by-step or continuous reading sensor (4) along an electric axle (16) fitted on a bracket (5bis) in order to read the row of slides (13) in succession; said bracket (5bis) is connected to a central motorised mobile carriage (6bis), which is located under a lifting lever (3bis) and slides on respective central axes of movement (7bis), as per Fig. 16A.

In any event, by being partially lifted, the slides (13) do not suffer any damage or alteration, as no pressure or friction is applied to the same.

The entire system (S) is actuated by means of a motor (9) which drives the pulleys (8) connected together by belts (10); two mobile carriages (6) move following the actuation of the pulleys (8). Said mobile carriages (6) are mechanically or electrically connected together and simultaneously move the comb device (2) and the bracket (5) on which the reading sensor (4) is located. As a result of this feature, the distance between the reading sensor (4) and the slides (13) to be read is identical for each movement and synchronous with the row of slides (13) to be lifted.

In addition to 1D and 2D codes, the reading sensor (4) is also able to read alphanumeric codes.

The axes of movement (7) of the carriages (6) are not fitted with drive belts and move synchronously with each other by means of individual motors connected to an electric shaft.

The axes of movement (7) are designed to identify the lifting point on the slide or slides (13) to be read. Said identification can be carried out to map the entire container (12) or, if required, it may serve to remove slides (13) from the container (12) on a temporary basis.

As an alternative to the axes of movement (7), central axes of movement (7bis) with a single mobile carriage (6bis) located below the comb device (2) and the lifting lever (3bis) can be fitted.

The lifting lever (3) can be individual to lift the entire row of slides (13) or, alternatively, with single actuators to lift each slide (13) in the row.

With regard to both storage and reading for extraction, the system is fully programmable using a PC.

Once the system has read all the rows of slides (13), it returns to its starting position, in order to be able to start reading a new container (12) when loaded. Said reading system is used in combination with traceability and filing management software, eliminating human error in full.

The materials and sizes of the invention as described above, illustrated in the accompanying drawings and claimed hereunder, may be of any variation in accordance with requirements.

## Claims

1. An automated system (S) for reading identification codes printed on slides (13) that comprises:
- guides (1) for positioning in a fixed position a container (12) with slots (14) on the base of the same, inside which slides (13) are housed in an orderly manner in spaces;
- a comb device (2) for lifting a row of slides (13);
- a sensor (4) for reading slides (13) positioned on a bracket (5) connected to two mobile carriages (6) that move on axes of movement (7);
- a door (11) for inserting the container (12) in the system (S); the system (S) being **characterised in that** it comprises:
- a lifting lever (3) configured to move the comb device (2);
- pulleys (8) configured to actuate the two mobile carriages to move on the axes of movement (7);
- a motor (9) configured to drive the pulleys (8) connected together by belts (10); where the two mobile carriages (6) are configured to move following the actuation of the pulley (8), and wherein said mobile carriages (6) are mechanically or electrically connected together and simultaneously move the comb device (2) and the bracket (5) on which the reading sensor (4) is located, and further **characterized in that** the lifting lever (3) is configured to move to under the row of slides (13) to be lifted, enter the slot (14) of the container (12) and actuate the raising of the row of slides (13) such that the distance between the reading sensor (4) and the slides (13) to be read is identical for each movement and synchronous with the row of slides (13) to be lifted.

2. The system (S) according to claim 1 **characterised in that**, in an alternative embodiment, it can read multiple rows of slides (13) in a different manner using more than one comb device (12) positioned at different pitches, each one actuated by its own lifting lever (3).

3. The system (S) according to claim 1 **characterised in that** the reading sensor (4):
- is secured to the bracket (5) and moves together with the mobile carriages (6), which move on the axes of movement (7), and the bracket (5) to maintain constant the reading distance between slides (13) to be read and the sensor (4);
- alternatively, the sensor reads the whole area of the vertical container (15);
- alternatively, the sensor moves by means of an additional electric axle (16) along a bracket (5bis) connected to a central mobile carriage (6bis) located under a lifting lever (3bis) and which slides on respective central axes of movement (7bis).

4. The system (S) according to claim 1 **characterised in that** the axes of movement (7) of the carriages (6) are not fitted with drive belts and move synchronously with each other by means of individual motors connected to an electric shaft.

5. The system (S) according to claim 1 **characterised in that** the lifting lever (3) is individual to lift the entire row of slides (13) or, alternatively, has single actuators to lift each slide (13).

## Patentansprüche

1. Automatisiertes System (S) zum Lesen von auf Objektträgern (13) aufgedruckten Identifizierungscodes, umfassend:
- Führungen (1) zum Positionieren, in einer festgelegten Position, eines Behälters (12), an dessen Unterseite sich Schlitze (14) befinden und in dessen Inneren Objektträger (13) in geordneter Weise in entsprechenden Plätzen untergebracht sind,
- eine Kammvorrichtung (2) zum Anheben einer Reihe von Objektträgern (13);
- einen Sensor (4) zum Lesen von Objektträgern (13), der auf einer Halterung (5) angeordnet ist, die mit zwei beweglichen Wagen (6) verbunden ist, die sich auf entsprechenden Bewegungsachsen (7) bewegen;
- eine Tür (11) zum Einführen des Behälters (12) in das System (S); wobei das System (S) **dadurch gekennzeichnet ist, dass** es Folgendes umfasst:
- einen Hubhebel (3), der dafür ausgelegt ist, die Kammvorrichtung (2) zu bewegen,
- Riemenscheiben (8), die dafür ausgelegt sind, die zwei beweglichen Wagen zu betätigen, damit sie sich auf den Bewegungsachsen (7) bewegen;
- einen Motor (9), der dafür ausgelegt ist, die Riemenscheiben (8) anzutreiben, die durch Riemen (10) miteinander verbunden sind, wobei die zwei beweglichen Wagen (6) dafür ausgelegt sind, sich infolge der Betätigung der Riemenscheibe (8) zu bewegen, und wobei die beweglichen Wagen (6) mechanisch oder elektrisch miteinander verbunden sind und gleichzeitig die Kammvorrichtung (2) und die Halterung (5) bewegen, auf welcher der Lesesensor (4) angeordnet ist, und ferner **dadurch gekennzeichnet, dass** der Hubhebel (3) dafür ausgelegt ist, sich unter die Reihe von anzuhebenden Objektträgern (13) zu bewegen, in den Schlitz (14) des Behälters (12) einzutreten und das Anheben der Reihe von Objektträgern (13) zu bewirken, so dass der Abstand zwischen dem Lesesensor (4) und den zu lesenden Objektträgern (13) für jede Bewegung identisch ist und synchron mit der Reihe von anzuhebenden Objektträgern (13) ist.

2. System (S) nach Anspruch 1, **dadurch gekennzeichnet, dass** es, in einer alternativen Ausführungsform, mehrere Reihen von Objektträgern (13) in differenzierter Weise lesen kann, unter Verwendung von mehr als einer Kammvorrichtung (2), die in differenzierten Schrittabständen angeordnet sind und jeweils von einem eigenen Hubhebel (3) betätigt werden.

3. System (S) nach Anspruch 1, **dadurch gekennzeichnet, dass** der Lesesensor (4):
- an der Halterung (5) festgelegt ist und sich zusammen mit den beweglichen Wagen (6), die sich auf den Bewegungsachsen (7) bewegen, und mit der Halterung (5) bewegt, um den Leseabstand zwischen den zu lesenden Objektträgern (13) und dem Sensor (4) konstant zu halten;
- alternativ dazu der Sensor den gesamten Bereich des vertikalen Behälters (15) liest;
- alternativ dazu der Sensor sich mittels einer zusätzlichen elektrischen Achse (16) entlang einer Halterung (5bis) bewegt, die mit einem mittleren beweglichen Wagen (6bis) verbunden ist, der unter einem Hubhebel (3bis) angeordnet ist und auf entsprechenden mittleren Bewegungsachsen (7bis) gleitet.

4. System (S) nach Anspruch 1, **dadurch gekennzeichnet, dass** die Bewegungsachsen (7) der Wagen (6) nicht mit Antriebsriemen ausgestattet sind, sondern synchron zueinander mittels einzelner Motoren bewegt werden, die mit einer elektrischen Welle verbunden sind.

5. System (S) nach Anspruch 1, **dadurch gekennzeichnet, dass** ein einziger Hubhebel (3) zum Anheben der gesamten Reihe von Objektträgern (13) vorgesehen ist, oder, alternativ dazu, einzelne Aktoren zum Anheben jedes Objektträgers (13) vorgesehen sind.

## Revendications

1. Un système automatisé (S) de lecture de codes d'identification imprimés sur des lames (13) qui comprend :
- des guides (1) pour placer dans une position fixe un récipient (12) doté de fentes (14) sur sa propre base, à l'intérieur duquel des lames (13) sont logées de façon ordonnée dans des espaces ;
- un dispositif à peigne (2) pour soulever une rangée de lames (13) ;
- un capteur (4) de lecture de lames (13) positionné sur un support (5) relié à deux chariots mobiles (6) qui se déplacent sur des axes de déplacement (7) ;
- une porte (11) pour introduire le récipient (12) dans le système (S) ;
le système (S) étant **caractérisé en ce qu'**il comprend :
- une levier de levage (3) configuré pour déplacer le dispositif à peigne (2) ;
- des poulies (8) configurées pour entraîner les deux chariots mobiles à se déplacer sur les axes de déplacement (7) ;
- un moteur (9) configuré pour entraîner les poulies (8) reliées ensemble par des courroies (10) ; où les deux chariots mobiles (6) sont configurés pour se déplacer à la suite de l'actionnement de la poulie (8), et dans lequel lesdits chariots mobiles (6) sont mécaniquement ou électriquement reliés ensemble et déplacent simultanément le dispositif à peigne (2) et le support (5) sur lequel est placé le capteur de lecture (4), et étant en outre **caractérisé en ce que** le levier de levage (3) est configuré pour se déplacer en dessous de la rangée de lames (13) à soulever, pour entrer dans la fente (14) du récipient (12) et pour actionner le levage de la rangée de lames (13) de manière à ce que la distance entre le capteur de lecture (4) et les lames (13) à lire soit identique pour chaque déplacement et en synchronisation avec la rangée de lames (13) à soulever.

2. Le système (S) selon la revendication 1, **caractérisé en ce que**, dans une variante de réalisation, il peut lire plusieurs rangées de lames (13) de façon différenciée en utilisant plus d'un dispositif à peigne (2) positionné à des pas différents, chacun d'entre eux étant actionné par son propre levier de levage (3).

3. Le système (S) selon la revendication 1, **caractérisé en ce que** le capteur de lecture (4) :
- est fixé au support (5) et se déplace conjointement avec les chariots mobiles (6), qui se déplacent sur les axes de déplacement (7), et le support (5) afin de maintenir la distance de lecture constante entre des lames (13) à lire et le capteur (4) ;
- alternativement, le capteur lit toute la zone du récipient vertical (15) ;
- alternativement, le capteur se déplace au moyen d'un axe électrique supplémentaire (16) le long d'un support (5bis) relié à un chariot mobile central (6bis) situé sous un levier de levage (3bis) et qui coulisse sur des axes de déplacement (7bis) centraux respectifs.

4. Le système (S) selon la revendication 1, **caractérisé en ce que** les axes de déplacement (7) des chariots (6) ne sont pas équipés de courroies d'entraînement et se déplacent de façon synchronisée entre eux au moyen de moteurs individuels reliés à un arbre électrique.

5. Le système (S) selon la revendication 1, **caractérisé en ce que** le levier de levage (3) est unique pour soulever toute la rangée de lames (13) ou, alternativement, a des actionneurs individuels pour soulever chaque lame (13).
